# EUROPEAN PATENT APPLICATION

(11) **EP 3 085 551 A1**
(43) Date of publication of application: **26.10.2016**
(21) Application number: 13899586.5
(22) Date of filing: 19.12.2013
(51) Int. Cl.: B60B 7/12, B60B 7/06

(54) **HUB CAP FOR VEHICLE WHEELS**

(71) Applicant: Zanini Auto Grup, S.A., 08150 Parets del Vallés - Barcelona (ES)
(72) Inventor: CASANOVAS CEJUELA, Miquel, E-08150 Parets del Valles (Barcelona) (ES); DURAN BOFILL, Pere, E-08150 Parets del Valles (Barcelona) (ES); BURGADA VILAPLANA, Francisco, E-08150 Parets del Valles (Barcelona) (ES)
(74) Representative: Herrero & Asociados, S.L.
(86) International application number: PCT/ES2013/070902
(87) International publication number: WO 2015/092082

(57) **Abstract**

The hubcap for vehicle wheels comprises a disk (1), a ring (2) to secure the hubcap to said rim of the vehicle wheel and a plurality of securing modules (3) for securing the ring (2) to said disk (1), each of said securing modules (3) comprising at least a first securing element (5) which is coupled to said ring (2); characterized in that each securing module (3) also comprises a positioner (8), such that the ring (2) is retained between the first securing element (5) and the positioner (8) in its position of use, said first securing element (5) and said positioner (8) defining a lodging for said ring (2) before placing it in its position of use.

It enables simpler placement of the ring, which can be carried out by applying pressure solely in the axial direction.

## Description

The present invention relates to a hubcap for vehicle wheels comprising a ring, which is coupled thereto.

### Background of the invention

Hubcaps are the elements externally attached on the rims of the wheels, and their purpose may be stylish or they may try to improve the aerodynamics of the vehicle.

A solution used for coupling the hubcap to the wheel rims is to provide the hubcap with a flexible ring on the inside, which fits on through pressure into securing modules of the hubcaps.

The main drawback of this coupling system with a ring is that placing the ring into said securing modules has to be carried out manually, coupling the ring into each securing module individually, which is cumbersome and expensive.

This type of hubcap using a ring is described in document WO 2012/010778 A1. The hubcap described therein comprises securing means for said ring formed by a pair of fixed side retainers and a flexible central flap. In this hubcap, the coupling of the ring has to be carried out manually. If it is carried out mechanically, it has to be done by a complex machine that can undertake several movements to deform each of the legs independently.

Therefore the objective of the hubcap of the present invention is enabling quick and easy coupling of the ring to the hubcap disk, making it possible to couple it at the same time in all of the securing modules and, if desired, having it carried out by a simple machine that only exerts pressure in the axial direction, thus minimizing the time required for coupling the ring.

### Description of the invention

The hubcap for vehicle wheels of the invention resolves the aforementioned drawbacks and has other advantages that are described below.

The hubcap for vehicle wheels according to the present invention comprises a disk, which in its position of use, covers the rim of a vehicle wheel, a ring to secure the hubcap to said rim of the vehicle wheel and a plurality of securing modules for securing the ring to said disk, each of said securing modules comprising at least a first securing element which is coupled to said ring; characterized in that each securing module also comprises a positioner, such that the ring is retained between the first securing element and the positioner in its position of use, said first securing element and said positioner defining a lodging for said ring before placing it in its position of use.

According to an embodiment, the hubcap for vehicle wheels according to the present invention may also comprise second securing elements.

Advantageously, the hubcap for vehicle wheels according to the present invention may also comprise support elements on which said ring is supported in its position of use.

According to a preferred embodiment, said first flexible securing elements are two and they are connected to each other on the lower and/or upper part.

For example, said first securing elements can be connected by means of a connection to a bottom element on which said ring is supported in its position of use.

Advantageously, said support elements are comprised of projections for the positioning of the ring.

Preferably, said second flexible securing elements are located opposite said support elements on the ends of each securing module.

Advantageously, said positioner is placed in a central position in each securing module.

Furthermore, each of said first flexible securing elements can be connected to a rigid support element by means of a connecting arm, and each of the second securing elements can be comprised of a retaining projection for retaining the ring in its position of use, and for supporting the ring before placing it in its position of use.

The hubcap of the present invention makes placing the ring much simpler, making it possible to carry out the task with a simple machine which only exerts pressure in axial direction, or in the case of manual mounting, pressure only has to be exerted in axial direction.

### Brief description of the drawings

For the purpose of helping to make the foregoing description more readily understandable, it is accompanied by a set of drawings that, schematically and by way of illustration and not limitation, represent an embodiment.
Figure 1 is a perspective view of a portion of the hubcap of the present invention, according to a first embodiment, without the securing ring;
Figure 2 is a perspective view of a portion of the hubcap of the present invention, according to a first embodiment, with the securing ring in its coupling position; and,
Figures 3 to 5 are schematic elevation views of the mounting process of the ring on the hubcap according to the first embodiment of the present invention;
Figure 6 is a perspective view of a portion of the hubcap of the present invention, according to a second embodiment, without the securing ring;
Figure 7 is a perspective view of a portion of the hubcap of the present invention, according to a second embodiment, with the securing ring in its coupling position; and,
Figures 8 to 10 are schematic elevation views of the mounting process of the ring on the hubcap according to the second embodiment of the present invention.

### Description of a preferred embodiment

First, it must be noted that for reasons of simplicity, the figures only represent a portion of the hubcap of the present invention, in which a securing module is shown, as described below.

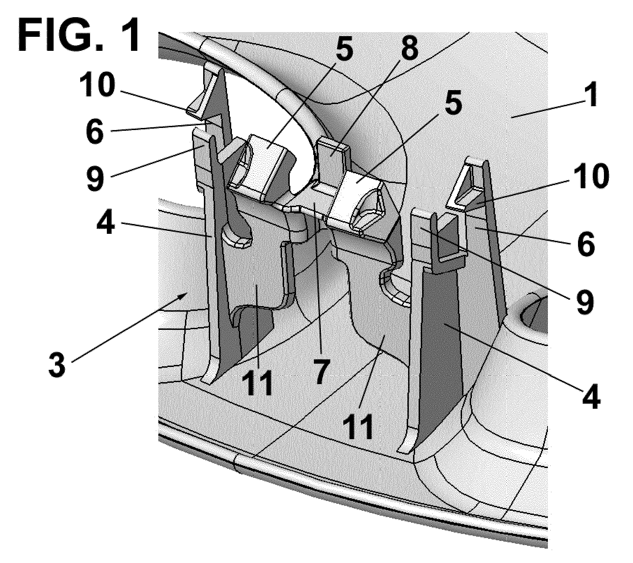

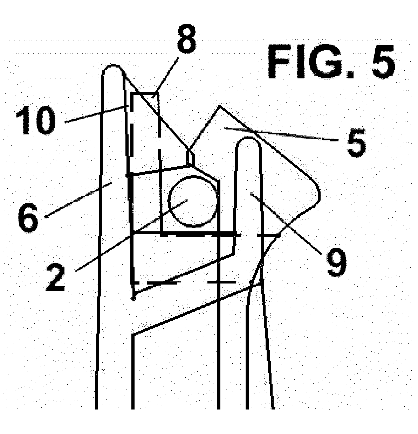

As can be seen in Figures 1 to 5, in which the first embodiment is shown, the hubcap of the present invention comprises a disk (1), which, when in position of use, covers the rim of the wheel of a vehicle (not shown). A ring (2) is coupled to said disk (1) by means of a plurality of securing modules (3), which are arranged immediately surrounding said disk (1).

As mentioned above, only one securing module (3) is shown in the figures for reasons of simplicity, but the number of securing modules (3) in a disk (1) should be adequate to ensure proper securing of the disk (1) to the rim of the wheel.

Each securing module (3) comprises a pair of support elements (4), at least one first securing element (5) (two in the shown embodiment) and, optionally, a pair of second securing elements (6), the ring (2) being secured by the securing element (s), as explained below.

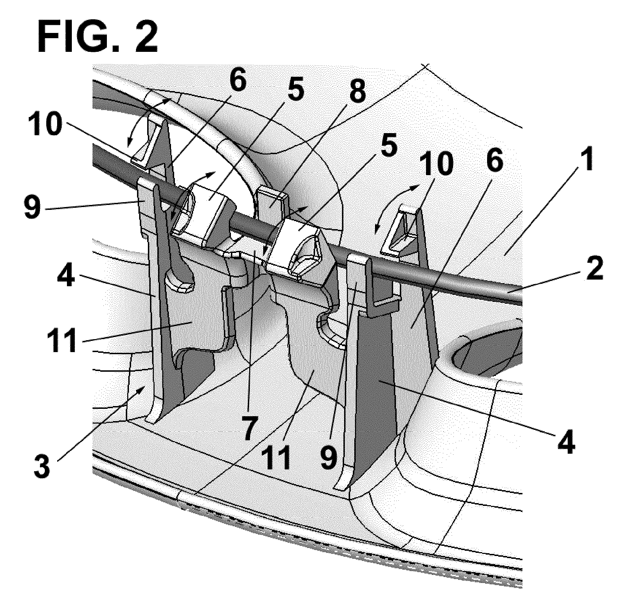

The support elements (4) are rigid, in other words, they do not flex when placing the ring (2) in its position of use (Figure 2), but rather their function consists in acting as a support for the ring (2). To this end, each supporting element (4) has a projection (9), which serves as a stop for said ring (2).

Said supporting elements (4) are placed at the end of the securing module (3), and substantially, said second securing elements (6) are placed facing the same.

The second securing elements (6) are flexible, in other words, they carry out an oscillating motion (indicated with arrows in Figure 2) when the ring (2) is placed in its position of use. To secure the ring (2), each second securing element (6) comprises a retaining projection (10) directed toward the position of said ring (2). As can be seen in Figure 2, the ring (2) is secured or retained between both projections (9) of the support elements (4) and the projections (10) of the second securing elements (6).

Meanwhile, the first securing elements (5) are also flexible, oscillating when the ring (2) is placed into or removed from its position of use, as indicated by the arrows in Figure 2. These first securing elements (5) are preferably connected to each other by a connection element (7), which comprises a positioner (8) retaining the ring (2) between said positioner (8) and said first securing elements (5). Furthermore, said connection element (7) also serves as a support for the ring (2).

In other words, in the hubcap of the present invention, the securing of the ring (2) is carried out at four points in each securing module (3), achieving a better grip, without representing a greater difficulty in the placing or removal of the ring (2) because of the resilient nature of the first and second securing elements (5) (6).

Furthermore, said first securing elements (5) are connected to said support elements (4) by means of a number of connecting arms (11), which can be flexed.

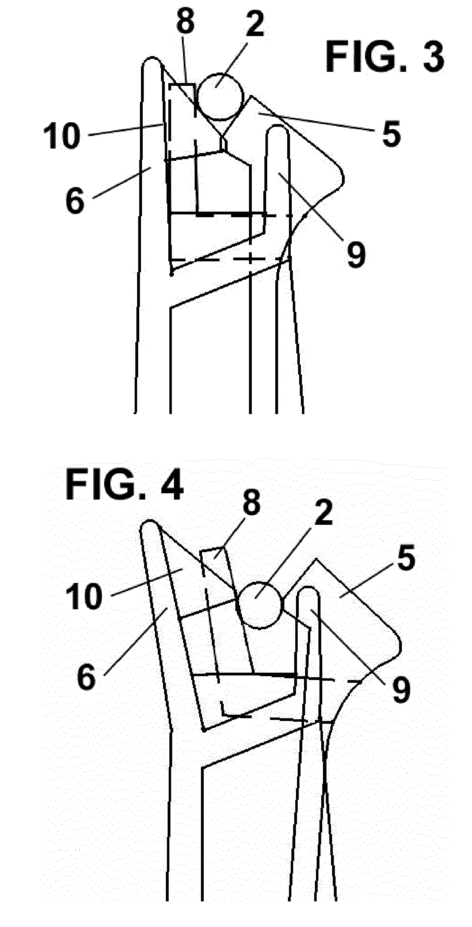

Placing the ring (2) in its position of use is very simple and can be seen in Figures 3 to 5, because it is only necessary to couple it to pressure in all of the securing modules (3) of the disk (1) by carrying out an axial motion. For this purpose, the ring (2) is held between the first securing element (5) and the positioner (8), creating a lodging for said ring (2) before placing it in its position of use.

Upon applying said axial pressure, the first securing elements (5) will oscillate to enable placing the ring (2) in its position of use on the support elements (4) and the connection element (7), the ring (2) being thus retained by said first securing elements (5).

In the event that said second securing elements (6) are included, these will also oscillate and retain the ring (2).

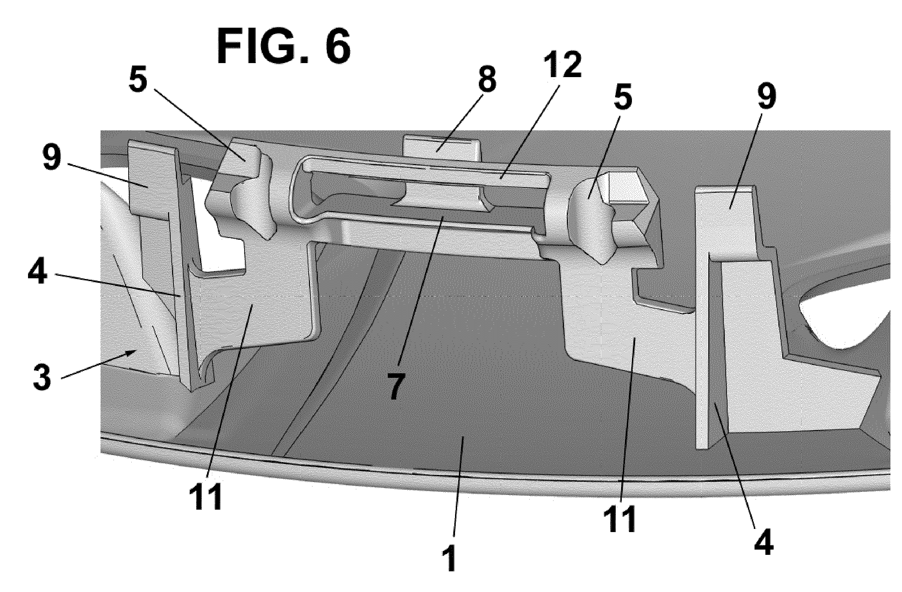

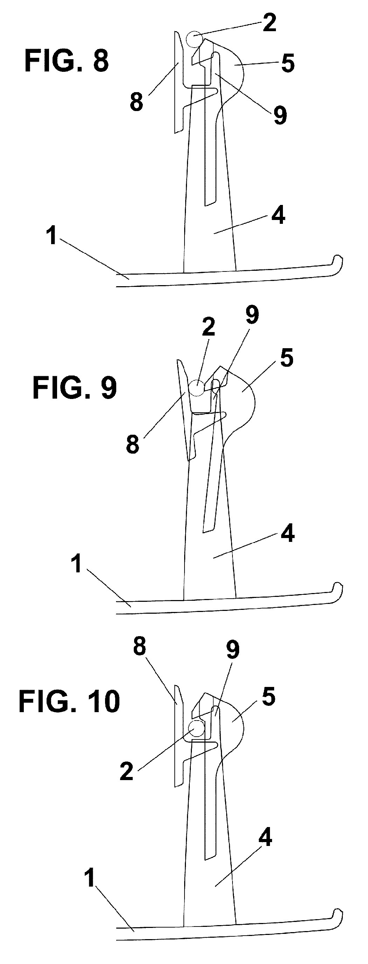

Figures 6 to 10 show a second embodiment of the hubcap of the present invention. It should be noted that for the sake of simplicity, the same numerical references are used to indicate the equivalent elements that carry out the same function.

It should also be noted that only the differences regarding said first embodiment are described below, such that the other features are the same in the first and the second embodiment.

The main difference between the second embodiment with respect to the first embodiment is that the second retaining elements have been removed, such that the retaining of the ring (2) to prevent removal can only be carried out by means of the first securing elements (5).

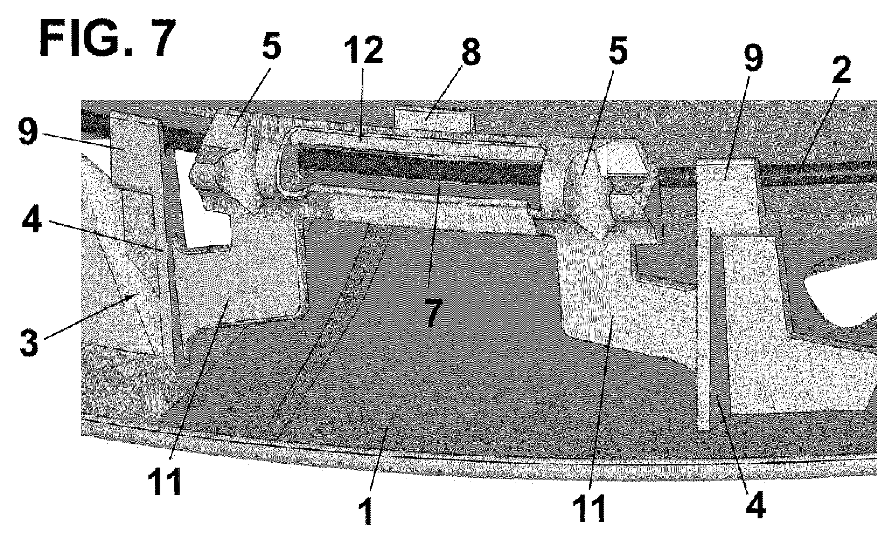

Another difference is the connection between the first securing elements (5), which are also connected at the top by means of a second connection element (12), as can be seen in Figures 6 and 7.

The process for placing and removing the ring (2) in this second embodiment is identical to the process described above in relation to the first embodiment.

Despite the fact that reference has been made to a specific embodiment of the invention, it is evident for the person skilled in the art that numerous variations and changes may be made to the hubcap for vehicle wheels described, and that all the aforementioned details may be substituted by other technically equivalent ones, without detracting from the scope of protection defined by the attached claims.

## Claims

1. A hubcap for vehicle wheels, comprising a disk (1) which in its position of use, covers the rim of a vehicle wheel, a ring (2) to secure the hubcap to said rim of the vehicle wheel and a plurality of securing modules (3) for securing the ring (2) to said disk (1), each of said securing modules (3) comprising at least a first securing element (5) which is coupled to said ring (2); **characterized in that** each securing module (3) also comprises a positioner (8), such that the ring (2) is retained between the first securing element (5) and the positioner (8) in its position of use, said first securing element (5) and said positioner (8) defining a lodging for said ring (2) before placing it in its position of use.

2. The hubcap for vehicle wheels according to claim 1, further comprising second securing elements (6).

3. The hubcap for vehicle wheels according to claim 1, further comprising support elements (4) on which said ring (2) is supported in its position of use.

4. The hubcap for vehicle wheels according to claim 1, wherein said first securing elements (5) are two flexible elements and are connected to each other on the lower and/or the upper part.

5. The hubcap for vehicle wheels according to claim 4, wherein said first securing elements (5) are connected to each other by means of a lower connection plane (7) on which said ring (2) is supported in its position of use.

6. The hubcap for vehicle wheels according to claim 3, wherein said support elements (4) comprise projections (9) for positioning the ring (2).

7. The hubcap for vehicle wheels according to claim 2, wherein said second flexible securing elements (6) are located opposite said support elements (4) and on the ends of each securing module (3).

8. The hubcap for vehicle wheels according to claim 1, wherein said positioner (8) is placed in a central position in each securing module.

9. The hubcap for vehicle wheels according claim 1, wherein each of said first flexible securing elements (6) are connected to a rigid support element (4) by means of a connecting arm (11).

10. The hubcap for vehicle wheels according to claim 2, wherein each of the second securing elements (6) comprises a retaining projection (10) for retaining the ring (2) in its position of use, and for supporting the ring (2) before placing it in its position of use.
